# FASCICULE DE BREVET EUROPEEN

(11) **EP 0 848 195 B1**
(45) Date de publication et mention de la délivrance du brevet: **12.05.2004**
(21) Numéro de dépôt: 97420223.6
(22) Date de dépôt: 02.12.1997
(51) Int. Cl.: F16K 11/065, F16L 41/16

(54) **Vanne hydraulique et installation de distribution de liquides équipée de telles vannes**
Hydraulisches Ventil und Dispensiereinrichtung für Flüssigkeiten mit solchen Ventilen
Hydraulic valve and liquid dispensing system having such valves

(30) Priorité: 10.12.1996 FR 9615396
(43) Date de publication de la demande: 17.06.1998
(73) Titulaire: ABB PROCESS INDUSTRIE, 73100 Aix Les Bains (FR)
(72) Inventeur: Coendoz, Jean-Pierre, 73230 Saint Alban Leysse (FR)
(74) Mandataire: Vuillermoz, Bruno

(56) Documents cités:
- DE-B- 1 288 854
- FR-A- 1 506 383
- GB-A- 2 168 463

## Description

### Domaine Technique

L'invention concerne le domaine du matériel hydraulique, et elle vise plus particulièrement une vanne multivoies d'un type nouveau. L'invention concerne également une installation de distribution de liquides équipée de telles vannes. De telles installations peuvent s'avérer avantageuses dans l'industrie papetière, l'industrie des lubrifiants ou autres.

### Techniques antérieures

Dans de nombreuses industries, il s'avère nécessaire de préparer des solutions en mélangeant différents liquides de base. Ainsi, dans l'industrie papetière par exemple, pour réaliser une sauce de couchage, il convient de mélanger plus d'une dizaine de produits. Ces produits sont acheminés depuis un ensemble de réservoirs jusqu'à un réacteur approprié. Or, on sait que pour différentes qualités de papiers, les ingrédients sont variables. Ainsi, dans les installations existantes, lorsque la formulation change, la configuration des circuits d'acheminement des réservoirs vers le ou les réacteurs est modifiée. Cette configuration est assurée au moyen d'un faisceau de tuyauteries flexibles dont les extrémités sont raccordées en fonction de la distribution souhaitée.

Une telle solution présente de multiples inconvénients. En effet, elle nécessite des manoeuvres manuelles et n'est pas automatisable. En outre, l'utilisation de flexibles entraîne des risques de pollution des différentes solutions utilisées, car il s'avère difficile d'utiliser des systèmes de raclage automatique dans de tels flexibles.

Un premier problème que se propose donc de résoudre l'invention est celui de la configuration facilement modifiable d'un circuit de distribution de liquides.

Un second problème est celui de la possibilité d'un nettoyage automatique d'une telle installation.

L'invention pallie les inconvénients précités et résout les problèmes posés.

### Exposé de l'invention

L'invention concerne donc tout d'abord une vanne pour mettre en communication deux conduites où circulent des liquides, respectivement supérieure et inférieure, et dans laquelle chaque conduite est susceptible de recevoir au moins un racleur destiné à balayer la paroi interne desdites conduites et à refouler vers l'aval le liquide, ladite vanne comprenant un corps fixe avec des voies de raccordement aux conduites, un organe d'obturation mobile à l'intérieur dudit corps, et un moyen d'actionnement dudit organe d'obturation.

Une telle vanne est connue du document GB 2 168 463. Cette vanne se caractérise :
- en ce que les axes desdites conduites supérieure et inférieure sont décalés ;
- en ce que le corps comprend deux paires de voies de raccordement disposées dans des directions des conduites concernées ;
- et en ce que l'organe d'obturation mobile est percé en section d'un orifice traversant correspondant au diamètre de la conduite supérieure, et présentant sur la face en regard de la conduite inférieure une portion en excroissance dont le contour général correspond à une ouverture ménagée à cet effet dans la zone de communication débouchant à la conduite inférieure, pour venir se loger dans celle-ci pour coïncider avec le contour intérieur des voies de raccordement de la conduite inférieure, pendant que l'orifice traversant coïncide avec les voies de raccordement de la conduite supérieure, tandis que les bords de la portion en excroissance forment butée pour l'un des racleurs actifs de la conduite supérieure lorsque l'organe d'obturation est retiré, c'est-à-dire lorsque la vanne est ouverte.

En d'autres termes, la vanne conforme à l'invention permet la connexion entre deux conduites disposées dans deux plans différents et légèrement décalées l'une par rapport à l'autre. En fonction de sa position, l'organe d'obturation isole les deux conduites qui n'ont alors aucune connexion, ou bien les met en communication. En position fermée, c'est-à-dire lorsque les deux conduites sont indépendantes, la vanne présente une géométrie telle qu'elle permet le passage d'un racleur dans chacune des voies, ce qui la rend nettoyable de façon automatique.

Dans une forme préférée, les deux conduites sont orthogonales, mais l'invention couvre également les cas où celles-ci présentent une angulation quelconque, ou sont même parallèles.

Avantageusement en pratique, l'organe mobile d'obturation est cylindrique et présente un axe de symétrie perpendiculaire aux axes longitudinaux des conduites.

Dans une forme préférée de réalisation, la partie en excroissance de l'organe d'obturation mobile est également cylindrique et son axe de symétrie est confondu avec l'axe de symétrie de l'organe mobile proprement dit.

La géométrie de la vanne conforme à l'invention permet la mise en communication des conduites dont les diamètres internes sont différents ou identiques.

En pratique, le moyen d'actionnement de l'organe d'obturation est mécanique, et par exemple réalisé par un volant actionné manuellement et une vis sans fin, ou bien alors électromécanique ou pneumatique.

L'invention vise également une installation équipée d'une vanne comme décrite précédemment. Plus précisément, elle vise une installation pour distribuer une pluralité de liquides depuis un premier ensemble de réservoirs sources vers un second ensemble de réservoirs cibles au moyen d'un premier et d'un second faisceau de conduites parallèles.

Cette installation se caractérise en ce que les faisceaux sont disposés selon deux plans décalés l'un par rapport à l'autre, et en ce qu'elle comporte une vanne comme décrite précédemment, disposée au voisinage des zones de croisement des conduites du premier et du second faisceau, de manière à connecter lesdites conduites en fonction d'une configuration prédéterminée.

Autrement dit, les vannes décrites précédemment, assemblées les unes aux autres permettent de mettre en communication des tuyauteries situées dans des plans parallèles proches l'un de l'autre de quelques dizaines de centimètres. Dans les zones en regard des conduites des deux faisceaux, les vannes conformes à l'invention installées sur chaque connexion ouvrent ou maintiennent fermée la liaison entre les conduites adjacentes.

### Description sommaire des figures

La manière de réaliser l'invention, ainsi que les avantages qui en découlent ressortiront bien de la description des modes de réalisation qui suivent, à l'appui des figures annexées dans lesquelles :
La figure 1 est une vue d'une vanne conforme à l'invention montrée en coupe selon un plan passant par l'axe de la conduite inférieure et perpendiculaire à l'axe de la conduite supérieure, montrée dans l'état « fermé ».
La figure 2 est la coupe de la figure 1 dans laquelle la vanne est en position ouverte.
La figure 3 est une vue en coupe de la même vanne selon un plan passant par l'axe de la conduite supérieure et perpendiculaire à l'axe de la conduite inférieure, montrée dans l'état « fermé ».
La figure 4 est la coupe de la figure 3 dans laquelle la vanne est en position ouverte.
La figure 5 est une vue de l'organe mobile d'obturation vu selon l'axe de la conduite supérieure.
La figure 6 est une vue de la pièce de la figure 5 montrée selon l'axe de la conduite inférieure.
La figure 7 est une vue de la pièce de la figure 5 montrée selon son axe de déplacement à l'intérieur du corps de la vanne.
La figure 8 est une vue en perspective sommaire d'un détail d'une installation conforme à l'invention.

### Manière de réaliser l'invention

Comme déjà dit, l'invention concerne une vanne à quatre voies destinée à mettre en communication deux conduites décalées l'une par rapport à l'autre.

De façon générale, dans les figures, les conduites connectables sont représentées perpendiculaires, mais l'invention couvre bien entendu les cas de figures où ces conduites ont une angulation variable, ou sont parallèles.

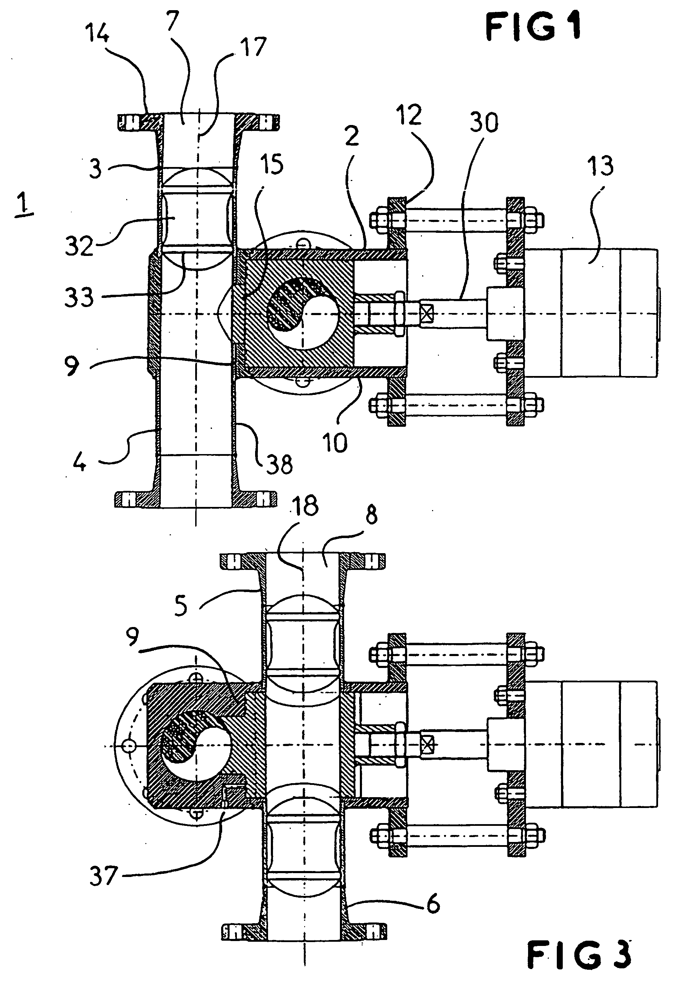

Comme on le voit à la figure 1, une telle vanne se compose essentiellement d'un corps (2) associé à une paire de portions (3, 4; 5, 6) de tuyauterie constituant les voies de raccordement aux conduites (7, 8) proprement dite. Le corps (2) se décompose d'une part en une zone de communication (9) entre ces deux conduites (7, 8), et une portion (10) destinée à recevoir et à permettre le coulissement d'un organe d'obturation mobile (11). Cette portion (10) se prolonge par une platine (12) de réception de l'organe de commande (13).

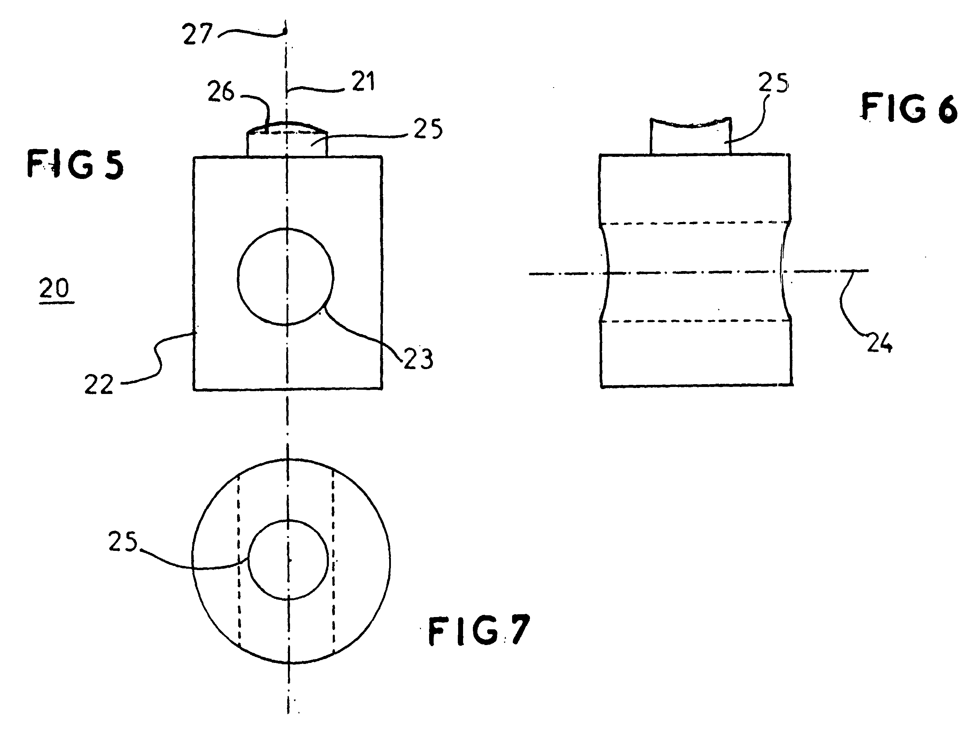

La vanne (1) reçoit un organe d'obturation mobile (20) illustré de manière isolée aux figures 5 à 7.

S'agissant du corps de la vanne (2), celui-ci peut être monobloc ou non, en fonction de l'application choisie, et de la qualité mécanique requise.

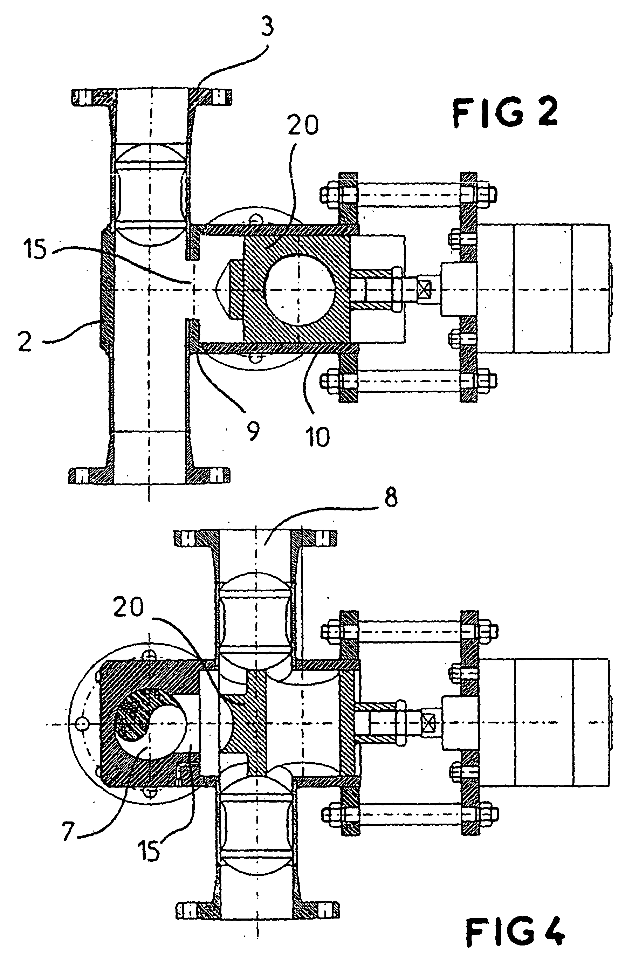

Dans la forme représentée aux figures 1 et 4, ces voies de raccordement (3, 4 ; 5, 6) sont montées sur une base commune constituant la zone de communication (9) des deux conduites (7, 8) entre elles. Des disques de raccordement (14) percés de part en part équipent les voies (3, 4 ; 5, 6) pour permettre la solidarisation avec les conduites adjacentes.

Dans la forme illustrée aux figures 1 et 4, les conduites inférieure (7) et supérieure (8) sont de diamètre égal mais l'invention couvre bien évidemment les variantes dans lesquelles les diamètres de ces conduites sont différents.

Le corps (2) de la vanne et plus précisément la zone de communication (9) présente une partie percée (15), avantageusement circulaire, mais qui peut être de forme diverse, mettant en communication la conduite supérieure (8) avec la conduite inférieure (7).

Selon une caractéristique essentielle de l'invention, le corps (2) proprement dit de la vanne est apte à recevoir un organe d'obturation mobile (20) de géométrie telle qu'il permet selon sa position, soit de mettre en communication les deux conduites inférieure (7) et supérieure (8), soit de les rendre indépendantes. Cet organe d'obturation mobile (20) peut se déplacer à l'intérieur du corps (2) de la vanne selon un axe (21) perpendiculaire aux deux axes (17, 18) des conduites (7, 8).

Dans la forme représentée, la portion (10) du corps (2) de la vanne destinée à permettre le coulissement de l'organe mobile et l'organe (20) lui-même sont de forme cylindrique à base circulaire. Bien évidemment, l'invention couvre également les variantes dans lesquelles l'organe d'obturation présenterait une section droite non pas circulaire mais elliptique, carrée ou rectangulaire, ou plus généralement polygonale.

Cet organe d'obturation (20), tel que représenté aux figures 5 à 7 présente une portion principale (22) cylindrique, dont les génératrices sont parallèles à l'axe (21) de déplacement dudit organe. Cette portion principale (22) est percée de part en part d'un orifice traversant (23), dont le diamètre correspond au diamètre intérieur de la conduite supérieure (8).

L'orifice traversant (23) est centré par rapport à la portion principale (22) de l'organe mobile (20), et son axe de symétrie (24) est perpendiculaire à l'axe de symétrie (21) de l'organe mobile (20).

Selon une caractéristique importante de l'invention, l'organe d'obturation (20) comporte également une portion en excroissance (25) dont le contour général correspond à celui de l'ouverture (15) ménagée à cet effet dans le corps (2) proprement dit de la vanne, et servant de raccordement (9) entre la conduite inférieure (7) et la conduite supérieure (8).

La partie extrémale (26) de cette zone en excroissance est conformée selon un profil cylindrique, d'une courbure égale à celle du contour interne de la conduite inférieure (7). De la sorte, lorsque cette portion en excroissance (25) vient au regard de l'ouverture (15) du corps (2) de la vanne, la conduite inférieure (7) est parfaitement cylindrique, de section droite constante. La distance entre l'axe (24) de l'orifice traversant (23) et le centre de courbure (27) de la portion extrémale (26) de la portion en excroissance (25) est égale à la distance entre les axes (17, 18) des deux conduites (7, 8).

La vanne (1), et plus précisément le corps (2) est équipé de moyens provoquant le déplacement dudit organe d'obturation. Dans la forme représentée, ces moyens sont constitués par un équipage électromagnétique (30) ou électropneumatique, connu en soi et qu'il n'est pas nécessaire de décrire plus avant.

Comme déjà dit, un des problèmes que se propose de résoudre l'invention est de rendre raclable les différentes conduites (7, 8) connectées par une vanne conforme à l'invention. Ainsi, comme on le voit à la figure 1, la conduite inférieure (7) peut recevoir un élément racleur (32), connu en soi, par exemple présentant deux lèvres élastomériques (33) de diamètre égal au diamètre intérieur de la conduite (7). La configuration de la zone en excroissance (25) de l'organe d'obturation permet le passage de ce racleur (32) sans encombre à l'intérieur de la conduite (7). Complémentairement, le diamètre de l'orifice traversant (23) de l'organe d'obturation (20) étant égal à celui de la conduite supérieure (8), des racleurs (32) comme illustrés à la figure 2 peuvent se déplacer sans rencontrer d'obstacle à l'intérieur de cette conduite supérieure lorsque l'axe (24) de cet orifice (23) coïncide avec celui (18) de la conduite (8). Ainsi, dans la position illustrée aux figures 1 et 2, les deux conduites (7, 8) sont indépendantes et peuvent être parcourues par des liquides différents sans risque de mélange. La zone excroissance (25) de l'organe d'obturation (20) épouse le contour intérieur de la conduite inférieure (7) tandis que l'orifice traversant (23) de l'organe d'obturation s'inscrit dans la conduite supérieure (8).

A l'opposé, lorsque l'organe d'obturation (20) se déplace dans le corps (2) de la vanne, la portion en excroissance (25) vient se dégager de l'ouverture (15) ménagée dans le corps (2) et met en communication la conduite supérieure (8) et la conduite inférieure (7). De la sorte, le liquide peut s'écouler de la conduite supérieure (8) vers la conduite inférieure (7). Cet écoulement peut être accompagné par la poussée de racleurs (32) tels qu'illustrés à la figure 4. Dans ce cas, l'organe d'obturation (20) forme butée pour les racleurs et bloque leur progression.

Comme on le voit aux figures 3 et 4, dans le corps (2) de la vanne et notamment dans la zone de communication (9) entre les deux conduites (7, 8) qui délimite l'ouverture (15), des conduits de détection (37) de fuite peuvent être aménagés pour assurer une vérification continue de la bonne étanchéité. Complémentairement, l'organe d'obturation (20) comporte deux joints toriques concentriques (non représentés) disposés de part et d'autre du conduit de détection de fuite (37) lorsque la vanne est en position fermée.

En outre, dans le cas de l'utilisation de racleurs (32) présentant un élément magnétique en vue de sa localisation à l'intérieur des conduites, les voies de raccordement (4) raccordées au corps des vannes présentent une zone (38) réalisée en un matériau amagnétique. De la sorte, en installant des détecteurs appropriés à proximité de ces zones (38), il est possible d'identifier la présence d'un racleur correspondant à une fin de phase de circulation par exemple.

Comme déjà dit, l'invention concerne également une installation de distribution de liquides équipée de vannes conformes à l'invention.

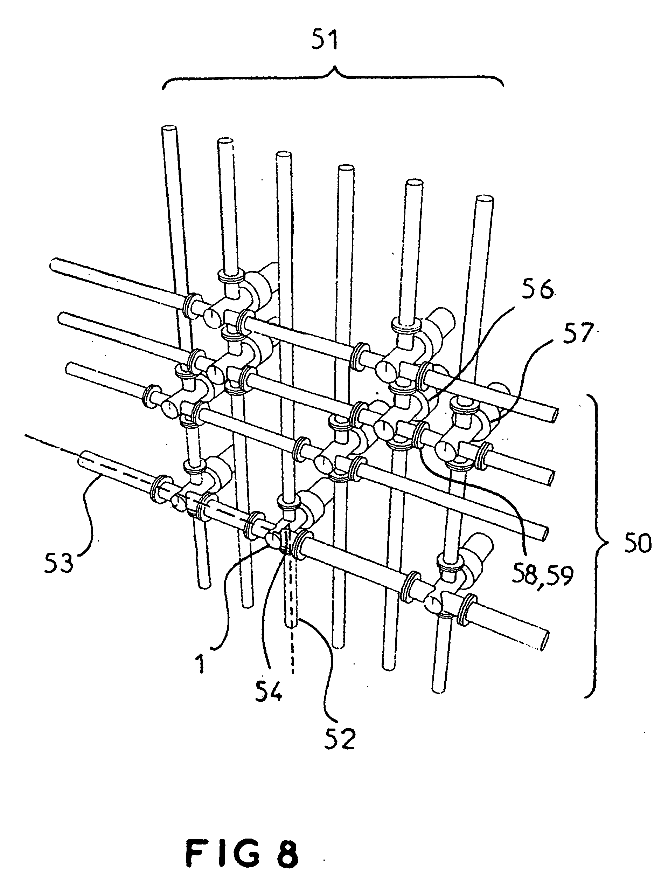

Ainsi, comme on le voit à la figure 8, une telle installation de distribution présente deux faisceaux (50, 51) ou nappes de conduites (52) parallèles. Ces deux faisceaux (50, 51) sont perpendiculaires l'un à l'autre ou non, et compris dans deux plans parallèles, légèrement décalés, typiquement de quelques dizaines de centimètres. Un premier faisceau (50), par exemple celui illustré en horizontal est relié à un ensemble de réservoirs sources non représentés. L'autre faisceau (51) est représenté verticalement, et est relié à un ensemble de réservoirs cibles, ou bien alors de façon plus générale à différents organes de remplissage, tels que par exemple des machines à papier, des unités de raffinement, de lubrifiant, et plus généralement toutes installations de formulation et de dosage de produits liquides distribués par tuyauteries.

Au niveau des croisements (54) des conduites horizontales et verticales, on insère une vanne (1) conforme à l'invention qui permet de connecter ou non les conduites correspondantes (52, 53). La multitude de vannes (1) disposées à chacun des croisements entre tuyauteries verticales et horizontales permet d'assurer des connexions multiples et reconfigurables en fonction des acheminements souhaités de produits depuis les réservoirs sources vers les réservoirs cibles.

Avantageusement, dans le cas où l'on souhaite interposer deux vannes (56, 57) conformes à l'invention au niveau de deux croisements de tuyauterie adjacents, les vannes, ou plus précisément leurs voies (58, 59) en regard sont directement reliées.

Il ressort de ce qui précède que les vannes conformes à l'invention présentent de multiples avantages et notamment :
- une grande simplicité mécanique, car une seule pièce est mobile à l'intérieur de la vanne ;
- l'étanchéité est assurée par la portée mobile ;
- les tuyauteries sont raclables en position fermée, car la forme cylindrique des tubes est reconstituée ;
- l'organe d'obturation mobile sert de butée au racleur.

En outre, l'installation conforme à l'invention, c'est-à-dire équipée de vannes caractéristiques présente l'avantage essentiel de permettre la connexion entre n'importe quelle tuyauterie du premier et du second faisceau, cette connexion étant modifiable à souhait pour obtenir une configuration de la distribution prédéterminée.

## Revendications

1. Vanne (1) pour mettre en communication deux conduites où circulent des liquides, respectivement supérieure (8) et inférieure (7), et dans laquelle chaque conduite (7, 8) est susceptible de recevoir au moins un racleur (32) destiné à balayer la paroi interne desdites conduites (7, 8) et à refouler vers l'aval le liquide, ladite vanne (1) comprenant un corps fixe (2) avec des voies de raccordement (3, 4 ; 5, 6) aux conduites, un organe d'obturation mobile (20) à l'intérieur dudit corps (2), et un moyen d'actionnement (30) dudit organe d'obturation (20),
**caractérisée :**
- **en ce que** les axes desdites conduites supérieure (8) et inférieure (7) sont décalés ;
- **en ce que** le corps (2) comprend deux paires de voies de raccordement (3, 4; 5, 6) disposées dans les directions des conduites concernées (7, 8) ;
- et **en ce que** l'organe d'obturation mobile (20) est percé en section d'un orifice traversant (23) correspondant au diamètre de la conduite supérieure (8), et présentant sur la face en regard de la conduite inférieure (7) une portion en excroissance (25) dont le contour général correspond à une ouverture (15) ménagée à cet effet dans la zone de communication (9) débouchant dans la conduite inférieure (7) pour venir se loger dans celle-ci pour coïncider avec le contour intérieur des voies (3, 4) de raccordement de la conduite inférieure (7), pendant que l'orifice traversant (23) coïncide avec les voies de raccordement (5, 6) de la conduite supérieure (8), tandis que les bords de la portion forment butée pour l'un des racleurs actifs (32) de la conduite supérieure (8) lorsque l'organe d'obturation (20) est retiré, c'est-à-dire lorsque la vanne est en position ouverte.

2. Vanne selon la revendication 1, **caractérisée en ce que** les axes (17, 18) des conduites supérieure (8) et inférieure (7) sont perpendiculaires.

3. Vanne selon la revendication 2, **caractérisée en ce que** l'organe d'obturation (20) est cylindrique et présente un axe de symétrie (21) perpendiculaire aux axes longitudinaux (17, 18) des conduites (7, 8).

4. Vanne selon la revendication 1, **caractérisée en ce que** la partie en excroissance (25) est cylindrique et son axe de symétrie est confondu avec l'axe de symétrie (21) de l'organe mobile (20) proprement dit.

5. Vanne selon la revendication 1, **caractérisée en ce que** les diamètres internes des conduites (7, 8) sont différents.

6. Vanne selon l'une des revendications 1 à 5, **caractérisée en ce que** le moyen d'actionnement (30) de l'organe d'obturation (20) est mécanique ou électromécanique ou électropneumatique.

7. Installation pour distribuer une pluralité de liquides depuis un premier ensemble de réservoirs sources vers un second ensemble de réservoirs cibles au moyen de d'un premier (50) et d'un second (51) faisceaux de conduites (52) parallèles, **caractérisée**
**en ce que** les faisceaux (50, 51)sont disposées selon deux plans décalés l'un par rapport à l'autre,
et **en ce qu'**elle comporte une vanne (1) selon l'une des revendications 1 à 6 disposée au voisinage des zones de croisement (54) des conduits (52, 53) du premier et du second faisceau, de manière à connecter lesdites conduit (52, 53) en fonction d'une configuration prédéterminée.

8. Installation selon la revendication 7, **caractérisée en ce que** les faisceaux (50, 51) de conduites (52, 53) sont perpendiculaires entre eux.

## Claims

1. A valve (1) for establishing communication between two pipes in which liquids flow, these being an upper pipe (8) and a lower pipe (7), and in which each pipe (7, 8) can accommodate at least one scraper (32) intended to sweep the internal wall of said pipes (7, 8) and push the liquid downstream, said valve (1) comprising a stationary body (2) with passages (3, 4; 5, 6) for connecting to the pipes, a moving shut-off member (20) inside said body (2), and a means (30) of operating said shut-off member (20),
wherein:
- the axes of said upper pipe (8) and of said lower pipe (7) are offset;
- the body (2) comprises two pairs of connection passages (3, 4; 5, 6) arranged in the directions of the pipes in question (7, 8);
- and the moving shut-off member (20) is pierced across its section with a through-orifice (23) that corresponds to the diameter of the upper pipe (8), and on its face that faces the lower pipe (7) has a protruding portion (25), the overall contour of which corresponds to an opening (15) made for this purpose in the communication region (9) that opens into the lower pipe (7) so as to be housed therein in order to coincide with the inside contour of the connection passages (3, 4) of the lower pipe (7) while the through-orifice (23) is coinciding with the connection passages (5, 6) of the upper pipe (8), while the edges of the portion form a stop for one of the active scrapers (32) of the upper pipe (8) when the shut-off member (20) is pulled back, that is to say when the valve is in the open position.

2. The valve as claimed claim 1, wherein the axes (17, 18) of the upper pipe (8) and of the lower pipe (7) are perpendicular.

3. The valve as claimed in claim 2, wherein the shut-off member (20) is cylindrical and has an axis of symmetry (21) perpendicular to the longitudinal axes (17, 18) of the pipes (7, 8).

4. The valve as claimed in claim 1, wherein the protruding part (25) is cylindrical and its axis of symmetry coincides with the axis of symmetry (21) of the actual moving member (20).

5. The valve as claimed in claim 1, wherein the inside diameters of the pipes (7, 8) are different.

6. The valve as claimed in one of claims 1 to 5, wherein the means (30) of operating the shut-off member (20) is mechanical or electromechanical or electropneumatic.

7. An installation for dispensing a number of liquids from a first set of source reservoirs to a second set of target reservoirs by means of a first array (50) and a second array (51) of parallel pipes (52),
wherein
the arrays (50, 51) are arranged in two planes which are offset from one another,
and this installation comprises a valve (1) as claimed in one of claims 1 to 6 arranged close to the regions (54) where the pipes (52, 53) of the first and of the second array cross, so that said pipes (52, 53) are connected in a predetermined configuration.

8. The installation as claimed in claim 7, wherein the arrays (50, 51) of pipes (52, 53) are mutually perpendicular.

## Patentansprüche

1. Ventil (1) zum Herstellen der Verbindung zwischen zwei Leitungen, in welchen Flüssigkeiten zirkulieren, nämlich eine obere (8) und eine untere (7), und bei welchem jede Leitung (7, 8) mindestens einen Molch (32) aufnehmen kann, der dazu bestimmt ist, die Innenwand der Leitungen (7, 8) abzustreifen und die Flüssigkeit stromabwärts zu fördern, wobei das genannte Ventil (1) einen feststehenden Körper (2) mit zu den Leitungen führenden Anschlusskanälen (3, 4; 5, 6), ein bewegliches Verschlussorgan (20) im Inneren des Körpers (2) und ein Mittel (30) zur Betätigung des genannten Verschlussorgans (20) umfasst,
**dadurch gekennzeichnet:**
- **dass** die Achsen der genannten oberen (8) und unteren (7) Leitungen versetzt sind;
- **dass** der Körper (2) zwei Paare Anschlusskanäle (3, 4; 5, 6) umfasst, die in den Richtungen der betreffenden Leitungen (7, 8) angeordnet sind;
- und **dass** das bewegliche Verschlussorgan (20) im Querschnitt von einer durchgehenden Öffnung (23) durchbohrt ist, die dem Durchmesser der oberen Leitung (8) entspricht, und auf der der unteren Leitung (7) zugewandten Seite einen vorstehenden Teil (25) aufweist, dessen allgemeine Kontur einer Öffnung (15) entspricht, die dazu in der Verbindungszone (9) angebracht ist, die in die untere Leitung (7) mündet, um sich in diese zu fügen, um mit der Innenkontur der Anschlusskanäle (3, 4) der unteren Leitung (7) zusammenzufallen, während die durchgehende Öffnung (23) mit den Anschlusskanälen (5, 6) der oberen Leitung (8) übereinstimmt, wogegen die Ränder des Teils einen Anschlag für einen der aktiven Molche (32) der oberen Leitung (8) bilden, wenn das Verschlussorgan (20) zurückgezogen ist, das heißt, wenn sich das Ventil in offener Stellung befindet.

2. Ventil nach Anspruch 1, **dadurch gekennzeichnet, dass** die Achsen (17, 18) der oberen Leitung (8) und der unteren Leitung (7) zueinander senkrecht stehen.

3. Ventil nach Anspruch 2, **dadurch gekennzeichnet, dass** das Verschlussorgan (20) zylindrisch ist und eine zu den Längsachsen (17, 18) der Leitungen (7, 8) senkrechte Symmetrieachse (21) aufweist.

4. Ventil nach Anspruch 1, **dadurch gekennzeichnet, dass** der vorstehende Teil (25) zylindrisch ist und dass seine Symmetrieachse mit der Symmetrieachse (21) des eigentlichen beweglichen Organs (20) zusammenfällt.

5. Ventil nach Anspruch 1, **dadurch gekennzeichnet, dass** die Innendurchmesser der Leitungen (7, 8) unterschiedlich sind.

6. Ventil nach einem der Ansprüche 1 bis 5, **dadurch gekennzeichnet, dass** das Betätigungsmittel (30) des Verschlussorgans (20) mechanisch oder elektromechanisch oder elektropneumatisch ist.

7. Einrichtung zum Verteilen einer Vielzahl von Flüssigkeiten ausgehend von einem ersten Satz Ursprungsbehälter zu einem zweiten Satz Zielbehälter mittels einem ersten Strang (50) und einem zweiten Strang (51) paralleler Leitungen (52), **dadurch gekennzeichnet,**
**dass** die Stränge (50, 51) in zwei zueinander versetzten Ebenen angeordnet sind
und **dass** sie ein Ventil (1) nach einem der Ansprüche 1 bis 6 umfasst, das in der Nähe der Kreuzungszonen (54) der Leitungen (52, 53) des ersten und des zweiten Strangs angeordnet ist, so dass die genannten Leitungen (52, 53) in Abhängigkeit von einer vorbestimmten Konfiguration verbunden werden.

8. Einrichtung nach Anspruch 7, **dadurch gekennzeichnet, dass** die Stränge (50, 51) von Leitungen (52, 53) zueinander senkrecht stehen.
